**Europäisches Patentamt**

(19) **European Patent Office**

**Office européen des brevets**

(11) Veröffentlichungsnummer: **0 022 179**
**B1**

(12) **EUROPÄISCHE PATENTSCHRIFT**

(45) Veröffentlichungstag der Patentschrift: 06.10.82

(21) Anmeldenummer: **80103144.4**

(22) Anmeldetag: **06.06.80**

(51) Int. Cl.³: **F 04 B 23/02,** F 04 B 13/00, C 02 F 1/00

(54) **Dosiervorrichtung.**

(30) Priorität: **07.07.79 DE 2927617**

(43) Veröffentlichungstag der Anmeldung: **14.01.81 Patentblatt 81/2**

(45) Bekanntmachung des Hinweises auf die Patenterteilung: **06.10.82 Patentblatt 82/40**

(84) Benannte Vertragsstaaten: **AT BE DE FR GB IT**

(56) Entgegenhaltungen:
**DE-A-1 802 844**
**DE-A-2 112 654**
**DE-A-2 524 732**
**FR-A-2 248 080**
**GB-A-2 023 223**
**US-A-3 308 955**

(73) Patentinhaber: **CILLICHEMIE Ernst Vogelmann GmbH & Co., Bottwarbahnstrasse 70, D-7100 Heilbronn (DE)**

(72) Erfinder: **Siller, Rudi, Goldschmiedstrasse 11, D-7101 Abstatt (DE)**

(74) Vertreter: **Maier, Eugen, Dr.-Ing. et al, Patentanwälte Dr.-Ing. Eugen Maier Dr.-Ing. Eckhard Wolf Pischekstrasse 19, D-7000 Stuttgart 1 (DE)**

BUNDESDRUCKEREI BERLIN

## Dosiervorrichtung

Die Erfindung betrifft eine Dosiervorrichtung der im Oberbegriff des Patentanspruchs 1 angegebenen Gattung.

Es ist eine Dosiervorrichtung dieser Art mit einem Wasserzähler als Antriebsmechanismus bekannt (FR-A-2 248 080), bei der die Dosierpumpe mit dem Antriebsmechanismus in einem gemeinsamen Gehäuse untergebracht ist. Die Dosierpumpe ist über je eine Rohr- oder Schlauchleitung mit einer an den Wirkstoffbehälter anschließbaren Kammer und druckseitig mit einer Einspritzöffnung an der Hauptwasserleitung verbindbar. Der an das Gehäuse anschließbare Wirkstoffbehälter ist einfach auswechselbar. Bei einer solchen Vorrichtung wird neben dem Wirkstoffbehälter sowohl die darunter befindliche Kammer als auch die Dosierpumpe sowie die zur Kammer und zur Einspritzöffnung führenden Zuleitungen unmittelbar mit der konzentrierten Wirkstofflösung beaufschlagt. Um aus der Wirkstofflösung auskristallisierende Ablagerungen in den Bereichen, die zu Verstopfungen und zu einem erhöhten Verschleiß führen können, weitgehend zu vermeiden, ist die genannte Kammer über ein Schwimmerventil mit Wasser aus der Hauptwasserleitung beaufschlagbar, so daß bei fehlender Wirkstofflösung in einem Bypass Wasser durch die Pumpe gefördert wird. Das Schwimmerventil spricht an, wenn die Wirkstofflösung im Behälter aufgebraucht oder der Wirkstoffbehälter selbst nicht vorhanden ist. Abgesehen davon, daß diese Vorkehrungen konstruktiv recht aufwendig sind, kann damit nicht verhindert werden, daß sich bei Vorhandensein von Wirkstofflösung vor allem bei längerem Stillstand der Vorrichtung und bei einem eventuellen Luftzutritt trotzdem unerwünschte Ablagerungen bilden. Von besonderem Nachteil ist dies für die beweglichen Teile innerhalb der Dosierpumpe und für das Schwimmerventil. Um einen zuverlässigen Betrieb zu gewährleisten, ist daher eine häufige Wartung und Reinigung der wirkstofführenden Teile erforderlich, die bisher nur von geschultem Wartungspersonal ausgeführt werden konnte.

Der Erfindung liegt die Aufgabe zugrunde, eine Dosiervorrichtung der genannten Art zu schaffen, bei der vor allem die beweglichen, dem Wirkstoff ausgesetzten Teile auch vom Laien leicht ausgewechselt werden können, so daß ein weitgehend wartungsfreier Betrieb gewährleistet ist und besondere Vorkehrungen für eine Spülung der betreffenden Teile mit Wasser entbehrlich sind.

Diese Aufgabe wird bei einer Dosiervorrichtung nach dem Oberbegriff des Anspruchs 1 dadurch gelöst, daß der Wirkstoffbehälter zusammen mit der Dosierpumpe eine an den Antriebsmechanismus und an dessen Gehäuse lösbar anschließbare, wegwerfbare Einheit bildet. Vorteilhafterweise ist auch die als in das strömende Wasser eintauchendes Einspritzventil ausgebildete Einspritzöffnung als an das wasserführende Gehäuse anschließbarer Bestandteil der wegwerfbaren Einheit ausgeführt.

Diese Lösung geht von der Erkenntnis aus, daß ein wartungsfreier Betrieb einer Dosiervorrichtung nur dann erzielt werden kann, wenn zumindest die beweglichen, dem Wirkstoff unmittelbar ausgesetzten Teile der Dosierpumpe und, falls möglich, auch das Einspritzventil einschließlich dessen Zuleitungen, zusammen mit dem entleerten Wirkstoffbehälter ausgewechselt und weggeworfen werden. Die erfindungsgemäße Verbindung dieser Teile mit dem Wirkstoffbehälter zu einer wegwerfbaren Einheit macht den Auswechselvorgang besonders einfach, so daß er auch vom Laien durchgeführt werden kann.

Das Einspritzventil ist vorteilhafterweise am freien Ende eines am Wirkstoffbehälter angeformten Dosierrohrs angeordnet, das durch einen am Gehäuse des Antriebsmechanismus angeordneten Kanal hindurch gegen die Wirkung eines im Kanal angeordneten Ventilkörpers in den wasserführenden Bereich des Gehäuses einführbar ist.

Bei einer Dosiervorrichtung mit einer als Kolbenpumpe ausgebildeten Dosierpumpe, die einen unter der Wirkung einer Druckfeder gegen eine Nockenscheibe des Antriebsmechanismus gedrückten, mit einem in einem Zylinder geführten Kolben verbundenen Stößel und einen im Zylinder angeordneten Ventilkörper aufweist, wird gemäß einer weiteren vorteilhaften Ausgestaltung der Erfindung vorgeschlagen, daß der vorgefertigte Pumpenzylinder mit Kolben und Ventilkörper in einer über je eine in dem Wirkstoffbehälter eingeformte Leitung mit dem Behälterinneren und dem Einspritzventil in Verbindung stehenden Behälterkammer angeordnet ist und daß der Kolbenstößel über eine Durchtrittsöffnung nach außen übersteht und gegenüber dieser mittels einer am einen Ende am Durchtrittsöffnungsrand und am anderen Ende am Stößel befestigten, faltenbalgartigen Hülle abgedichtet ist. Die vorgefertigte Pumpe kann bei der Herstellung des Wirkstoffbehälters in diesen eingebettet werden, so daß nachträglich nur noch die faltenbalgartige Dichtungshülle aufzuziehen ist. Zweckmäßig sind die Windungen der als Schraubenfeder ausgebildeten Feder mit der faltenbalgartigen Hülle verbunden, vorzugsweise in diese eingebettet.

Die Belüftung des Wirkstoffbehälters erfolgt vorteilhafterweise über ein an diesem angeformtes Belüftungsrohr, das eine durch eine an einer Sollbruchstelle abdrehbare Verschlußklappe verschlossene Belüftungsöffnung aufweist. Die Belüftungsöffnung bleibt während des Transports des Wirkstoffbehälters geschlossen und wird erst kurz vor dem Aufsetzen auf den Antriebsmechanismus geöffnet.

Um den Wirkstoffbehälter und die darin befindlichen Teile einfach am Antriebsmechanismus anschließen zu können, weist das Gehäuse des Antriebsmechanismus eine nach oben weisende tassenartige Öffnung zur Aufnahme des Wirkstoffbehälterunterteils auf. Dazu sind der Kolbenstößel der Dosierpumpe und vorzugsweise auch das Einspritzventil und die Belüftungsöffnung zweckmäßig nach unten weisend am Wirkstoffbehälterunterteil angeordnet, damit sie bei eingesetztem Behälter innerhalb der tassenartigen Öffnung an die zugehörigen Teile des Antriebsmechanismus und des Gehäuses anschließbar sind.

Der Wirkstoffbehälter und der Antriebsmechanismus sind vorteilhafterweise über eine lösbare, formschlüssige und lagefixierende Verbindung miteinander verbindbar. Diese Verbindung enthält zweckmäßig mindestens eine durch quer zur Richtung der Kolbenbewegung verlaufende und miteinander fluchtende Öffnungen des Wirkstoffbehälters und des Antriebsmechanismus hindurchsteckbare Stange oder einen entsprechenden Verankerungsbügel.

Der erfindungsgemäße Wirkstoffbehälter kann zusammen mit den eingeformten Rohrleitungen und Kammern als Blaskörper ausgebildet sein. Sofern als Druckmedium für die Herstellung des Blaskörpers die Wirkstoffflüssigkeit verwendet wird, wird der Wirkstoffbehälter gleichzeitig bei seiner Herstellung gefüllt. Auch die vorgefertigte Dosierpumpe kann durch Einlegen in die Blasform beim Herstellungsvorgang in den Wirkstoffbehälter eingebettet werden, so daß nachträglich nur noch die faltenbalgartige Dichtungshülle auf den Stößel und eventuelle ein Ventilschlauch auf das Dosierrohr aufgezogen werden müssen.

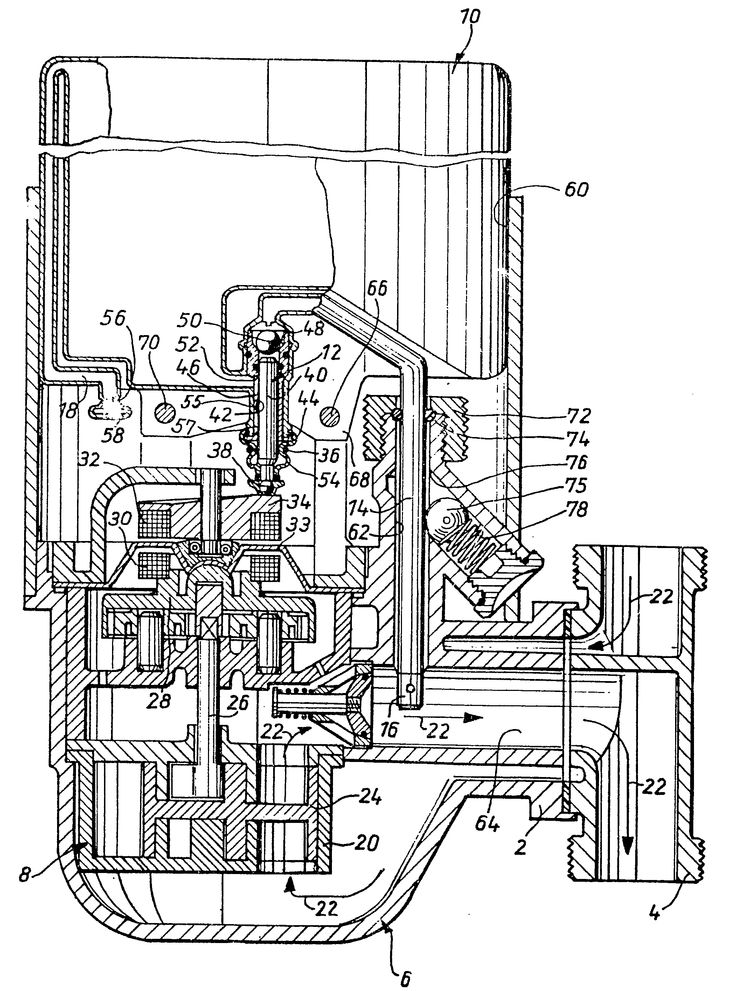

In der Zeichnung ist ein bevorzugten Ausführungsbeispiel der Erfindung in schematischer Weise dargestellt. Die einzige Figur zeigt einen senkrechten Schnitt durch eine Dosiervorrichtung.

Die Dosiervorrichtung besteht aus einem über einen Spezialstutzen 2 an eine Wasserleitung 4 anschließbaren, ein wasserführendes Gehäuse 6 enthaltenden Antriebsmechanismus 8 und einem Wirkstoffbehälter 10, in dem eine Dosierpumpe 12, ein Dosierrohr 14 mit Einspritzventil 16 und ein Belüftungsrohr 18 integriert sind.

Der Antriebsmechanismus 8 enthält einen als Ringkolbenzähler ausgebildeten Wassermotor 20, der von dem in Richtung der Pfeile 22 strömenden Leitungswasser angetrieben wird. Die Drehbewegung des Ringkolbens 24 wird über die Welle 26 auf die Drehscheibe 28 und von dort über eine magnetische Kopplung zwischen den ringförmig angeordneten Permanentmagneten 30, 32 auf die außerhalb der Gehäusewand 33 angeordnete Nockenscheibe 34 übertragen. Die Nockenscheibe 34 liegt gegen die Stirnfläche des nach unten über den Wirkstoffbehälter überstehenden und unter der Wirkung der als Schraubenfeder ausgebildeten Druckfeder 36 nach unten gedrückten Stößel 38 der als Kolbenpumpe ausgebildeten Dosierpumpe 12 so an, daß der Stößel zusammen mit dem Kolben 40 bei einer Umdrehung der Nockenscheibe einmal auf- und abwärts bewegt wird. Zur Führung des Kolbens 40 ist ein Zylinder 46 vorgesehen, der sich innerhalb einer im unteren Teil des Wirkstoffbehälters 10 eingeformten Kammer 42 befindet. Der Zylinder 46 weist in seinem oberen Teil einen zum Dosierrohr 14 weisenden Ventilsitz 48 für einen kugelförmigen Ventilkörper 50 sowie eine seitliche, mit dem Inneren des Wirkstoffbehälters 10 in Verbindung stehende Eintrittsöffnung 52 auf. Im Bereich der Durchtrittsöffnung 44 ist der Behälter 10 mit einer faltenbalgartigen, die Schraubenfeder 36 enthaltenden Gummihülle 54 gegen Flüssigkeitsaustritt abgedichtet. Die faltenbalgartige Hülle 54 stützt sich zusammen mit der Druckfeder 36 am einen Ende im Randbereich der Durchtrittsöffnung 44 und am anderen Ende am Pumpenstößel 38 ab. Der Kolben 40 ist durch einen Nocken 55 in einer Längsaussparung 57 des Zylinders geführt und gegen ein Herausfallen gesichert.

Bei nach unten verschobenem Kolben 40 wird die Eintrittsöffnung 52 freigegeben, so daß eine definierte Wirkstoffmenge in das Pumpeninnere gelangen kann. Diese Wirkstoffmenge wird beim Aufwärtsbewegen des Kolbens 40 unter Anheben der Ventilkörper 50 in das Dosierrohr 14 gedrückt, wobei gleichzeitig eine entsprechende Wirkstoffmenge über das Einspritzventil 16 in den wasserführenden Bereich 64 des Gehäuses austritt. Beim Zurückziehen des Kolbens 40 legt sich der Ventilkörper 50 gegen den Ventilsitz 48 und verhindert, daß der im Dosierrohr 14 befindliche und unter Druck stehende Wirkstoff zurückgesaugt wird. Die Belüftung des Wirkstoffbehälters erfolgt über das seitlich angeformte Belüftungsrohr 18, dessen nach unten weisende Öffnung mit einer an einer Sollbruchstelle 56 abdrehbaren Kappe 58 verschlossen ist, die vor Ingebrauchnahme abgenommen werden muß.

Der Antriebsmechanismus 8 ist mit seinem Gehäuse 6 stationär an der Wasserleitung 4 angeschlossen, während der Wirkstoffbehälter 10 zusammen mit der Dosierpumpe 12, dem Dosierrohr 14 und dem Belüftungsrohr 18 eine auswechselbare und nach Ausgebrauch wegwerfbare Einheit bildet. Der Wirkstoffbehälter 10 wird von oben her mit seinem unteren Teil in die tassenartige Öffnung 60 des Gehäuses so eingeführt, daß das nach unten überstehende Dosierrohr 14 mit der Einspritzöffnung 16 durch den am Gehäuse 6 angeordneten senkrechten Kanal 62 hindurch in den wasserführenden Bereich 64 des Gehäuses eingeschoben wird und der Stößel 38 auf der Oberfläche der Nockenscheibe 34 zu liegen kommt. Die Lagesicherung des Wirkstoffbehälters innerhalb der Tasse 60 erfolgt mit Hilfe eines Arretierungsbügels 66, der in entsprechende, in einem Ansatz 68 des Wirksoffbehälters 10 und im Gehäuse 6 befindliche Verankerungslöcher 70 eingesteckt wird. Zur Abdichtung des Kanals 62 ist an dessen oberem Ende eine von außen betätigbare Überwurfmutter 72 vorgesehen, mit Hilfe der ein flexibler Dichtungsring 74 zwischen Kanalinnenfläche und Dosierrohraußenfläche festgeklemmt werden kann.

Das Abnehmen des entleerte Wirkstoffbehälters 10 erfolgt in umgekehrt Reihenfolge, indem zunächst der Arretierung ügel 66 aus seinen Verankerungslöchern 70 herausgezogen und die Überwurfmutter 72 so weit gelöst wird, daß das Dosierrohr 14 beim Herausheben des Wirkstoffbehälters 10 aus dem Kanal 62 herausgezogen werden kann. Beim Herausziehen des Dosierrohrs 14 legt sich der unter der Einwirkung einer Druckfeder stehende kegelförmige Ventilkörper 75 gegen den innerhalb des Kanals 62 gebildeten Ventilsitz 76, so daß das in den Kanal nachdringende Leitungswasser nicht nach oben aus dem Kanal austreten kann. Beim Einsetzen des neuen Wirkstoffbehälters wird der Ventilkörper 75 von dem in den Kanal eindringenden Dosierrohr 14 unter Freigabe des Ventilsitzes 76 automatisch wieder in die seitliche Nische 78 zurückgedrückt. Auf diese Weise ist ein Behälterwechsel ohne Abstellen des Leitungswassers möglich.

Der Wirkstoffbehälter 10 mit den eingeformten Rohren 14, 18 und der Kammer 42 wird üblicherweise im Blasverfahren hergestellt, wobei als Druckmedium die Wirkstoffflüssigkeit verwendet und der Wirkstoffbehälter somit bei seiner Herstellung zugleich gefüllt werden kann. Auch der vorgefertigte Pumpenzylinder 46 mit Ventilkörper 50 und Kolben 40 wird durch Einlegen in die Blasform beim Herstellungsvorgang in den Wirkstoffbehälter eingebettet, so daß nachträglich nur noch die Durchtrittsöffnung 44 mit dem federnden Faltenbalg 54 abgedichtet und im Bereich des Einspritzventils 16 ein Gummischlauch auf das Dosierrohr aufgezogen werden muß. Der so vervollständigte Wirkstoffbehälter bildet eine bei Ausgebrauch wegwerfbare Einheit, so daß die sonst übliche Wartung der Dosierpumpe und des Einspritzventils entfällt.

## Patentansprüche

1. Vorrichtung zum Dosieren von flüssigen Wirkstoffen in strömendes Wasser mit einem an eine Wasserleitung (4) anschließbaren, ein wasserführendes Gehäuse (6) aufweisenden, durch das strömende Wasser betätigbaren Antriebsmechanismus (8) und einer durch den Antriebsmechanismus angetriebenen Dosierpumpe (12), die saugseitig mit dem Inneren eines auswechselbaren Wirkstoffbehälters (10) und druckseitig mit einer in das strömende Wasser einmündenden Einspritzöffnung verbunden ist, dadurch gekennzeichnet, daß der Wirkstoffbehälter (10) zusammen mit der Dosierpumpe (12) eine an den Antriebsmechanismus (8) und an dessen wasserführendes Gehäuse (6) lösbar anschließbare, wegwerfbare Einheit bildet.

2. Vorrichtung nach Anspruch 1, dadurch gekennzeichnet, daß die als Einspritzventil (16) ausgebildete Einspritzöffnung als an das wasserführende Gehäuse (6) anschließbarer Bestandteil der wegwerfbaren Einheit ausgeführt ist.

3. Vorrichtung nach Anspruch 2, dadurch gekennzeichnet, daß das Einspritzventil (16) am freien Ende eines am Wirkstoffbehälter (10) angeformten Dosierrohrs (14) angeordnet ist, das durch einen am Gehäuse (6) des Antriebsmechanismus (8) angeordneten Kanal (62) hindurch gegen die Wirkung eines in dem Kanal angeordneten Ventilkörpers (75) in den wasserführenden Bereich (64) des Gehäuses (6) einführbar ist.

4. Vorrichtung nach einem der Ansprüche 1 bis 3, mit einer als Kolbenpumpe ausgebildeten Dosierpumpe (12), die einen unter der Wirkung einer Druckfeder (36) gegen eine Nockenscheibe (34) des Antriebsmechanismus (8) gedrückten, mit einem in einem Zylinder (46) geführten Kolben (40) verbundenen Stößel (38) und einen im Zylinder angeordneten Ventilkörper (50) aufweist, dadurch gekennzeichnet, daß der vorgefertigte Pumpenzylinder (46) mit Kolben (40) und Ventilkörper (50) in einer über je eine in dem Wirkstoffbehälter (10) eingeformte Öffnung (52, 48) mit dem Behälterinneren und mit dem Einspritzventil (16) in Verbindung stehenden Behälterkammer (42) angeordnet ist und daß der Kolbenstößel (38) über eine Durchtrittsöffnung (44) nach dem Behälteräußeren übersteht und gegenüber dieser mittels einer am einen Ende am Rand der Durchtrittsöffnung und am anderen Ende am Stößel befestigten, faltenbalgartigen Hülle (54) abgedichtet ist.

5. Vorrichtung nach Anspruch 4, dadurch gekennzeichnet, daß die Windungen der als Schraubenfeder ausgebildeten Druckfeder (36) mit der faltenbalgartigen Hülle (54) verbunden, vorzugsweise in diese eingebettet sind.

6. Vorrichtung nach einem der Ansprüche 1 bis 5, dadurch gekennzeichnet, daß an dem Wirkstoffbehälter (10) ein Belüftungsrohr (18) angeformt ist, das eine durch eine an einer Sollbruchstelle (56) abdrehbare Verschlußkappe (58) verschlossene Belüftungsöffnung aufweist.

7. Vorrichtung nach einem der Ansprüche 1 bis 6, dadurch gekennzeichnet, daß das Gehäuse (6) des Antriebsmechanismus (8) eine nach oben weisende tassenartige Öffnung zur Aufnahme des Wirkstoffbehälterunterteils aufweist und daß der Kolbenstößel (38) und vorzugsweise auch das Einspritzventil (16) und die Belüftungsöffnung nach unten weisend am Wirkstoffbehälterunterteil angeordnet sind.

8. Vorrichtung nach einem der Ansprüche 1 bis 7, dadurch gekennzeichnet, daß der Wirkstoffbehälter (10) und der Antriebsmechanismus (8) über eine lösbare, formschlüssige und lagefixierende Verbindung (66, 70) miteinander verbunden sind.

9. Vorrichtung nach Anspruch 8, dadurch gekennzeichnet, daß die Verbindung mindestens eine durch quer zur Richtung der Kolbenbewegung verlaufende und miteinander fluchtende Verankerungslöcher (70) des Wirkstoffbehälters (10) und des Gehäuses (6) hindurchsteckbare Arretierungsstange oder einen entsprechenden Arretierungsbügel (66) enthält.

10. Vorrichtung nach einem der Ansprüche 1 bis 9, dadurch gekennzeichnet, daß der Wirkstoffbehälter (10) als Blaskörper ausgebildet ist und daß der Wirkstoff das Druckmedium für die Herstellung des Blaskörpers bildet.

## Claims

1. An apparatus for metering liquid additives into flowing water with a driving unit (8) designed to be joined up with a water pipe (4), having a housing (6) for flowing water, and designed to be put into operation by the flowing water, and with a metering pump (12) powered by the driving unit, said pump having an suction side joined with the interior of a replaceable additive vessel (10) and having a pressure side joined with a injection opening running into the flowing water, characterized in that the additive vessel (10) together with the metering pump (12) take the form of a disposable unit designed to be removably joined up with the driving unit (8) and its said housing (6).

2. Apparatus as claimed in claim 1, characterized in that the injection opening, in the form of an injection valve (16), is an integral component of said disposable unit and is connectable to said housing (6).

3. Apparatus as claimed in claim 2, characterized in that thè injection valve (16) is placed at the free end of a metering tube (14) integrally formed with said additive vessel (10), said metering tube (14) being removably insertable in through a channel (62) placed on said housing (6) of the driving unit (8) against the effect of a valve body (75), placed in the channel, into the water flow path (64) of said housing (6).

4. Apparatus as claimed in one of claims 1 to 3 with a metering pump (12), in the form of a piston pump, the pump having a plunger (38) forced by a compression spring (36) against a cam (34) of the driving unit (8), said plunger (38) being joined with a piston (40) guided in a cylinder (46), said apparatus furthermore having a valve body (50) placed in the cylinder, characterized in that the ready-made pump cylinder (46) with the piston (40) and the valve body (50) is placed in a vessel space (42) joined up in each case by way of an opening (52, 48), formed in the additive vessel (10), with the inside of the vessel and with the injection valve (16) and in that the piston plunger (38) is placed running out through an opening (44) towards the outside of the vessel and is sealed in relation to the opening (44) by way of a bellows-like sleeve (54) which is fixed at the edge of the opening (44) at one end and to the plunger at the other end.

5. Apparatus as claimed in claim 4, characterized in that the turns of the compression spring (36), in the form of a helical spring, are joined with the bellowslike sleeve (54) and more specially bedded therein.

6. Apparatus as claimed in one of claims 1 to 5, characterized in that a ventilating pipe (18) is formed on the additive vessel (10), a cap (58) forming a closure for the open end of said ventilating pipe and able to be twisted off at a predetermined breaking point (56) and removed from said ventilating pipe.

7. Apparatus as claimed in one of claims 1 to 6, characterized in that the housing (6) of the driving unit (8) has an upwardly facing cup-like opening taking up the lower part of the additive vessel and in that the piston plunger (38) and preferably the injection valve (16) as well as the open end of the ventilating pipe are placed on the lower part of the additive vessel so as to be facing downwards.

8. Apparatus as claimed in one of claims 1 to 7, characterized in that the additive vessel (10) and the driving unit (8) are releasibly joined together by a locking, positioning connection (66, 70).

9. Apparatus as claimed in claim 8, characterized in that the connection has at least one locking rod, or an U-like locking piece (66) with the same function, running normal to the direction of piston motion and able to be slipped through anchoring holes (70), in line with each other, in the additive vessel (10) and the housing (6).

10. Apparatus as claimed in one of claims 1 to 9, characterized in that the additive vessel (10) comprises a blow body with the additive formung the pressure medium for forming said blow body.

## Revendications

1. Dispositif de dosage de substance aktive liquide dans un écoulement d'eau, comportant un mécanisme d'entraînement (8) pouvant être relié à un tuyau d'eau (4), comportant un carter de canalisation d'eau (6) et pouvant être actionné par l'eau en écoulement, ainsi qu'une pompe de dosage (12) entraînée par ledit mécanisme et qui est reliée du côté d'aspiration au volume intérieur d'un récipient de substance active (10) remplaçable et, du côté de refoulement, avec un orifice d'injection débouchant dans l'eau en écoulement, caractérisé en ce que le récipient de substance active (10) constitue, en association avec la pompe de dosage (12), un ensemble que l'on peut jeter après usage et pouvant être relié de façon séparable au mécanisme d'entraînement (8) et à son carter de canalisation d'eau (6).

2. Dispositif selon la revendication 1, caractérisé en ce que l'orifice d'injection agencé sous forme d'une soupape d'injection (16) est réalisé comme un composant de l'ensemble que l'on peut jeter et qui peut être relié au carter de canalisation d'eau (6).

3. Dispositif selon la revendication 2, caractérisé en ce que la soupape d'injection (16) est placée à l'extrémité libre d'un tube de dosage (1. formé sur le récipient de substance active (1ɔ) et qui peut être introduit. ır l'intermédiaire d'un canal (62) disposé su e carter (6) du mécanisme d'entraînement (ε,, et en opposition à l'action d'un corps de soupape (75) disposé dans le canal, dans la zone d'écoulement d'eau (64) du carter (6).

4. Dispositif selon l'une quelconque des revendications 1 à 3, comportant une pompe de dosage (12) agencée comme une pompe à piston et qui comporte un poussoir (38) poussé sous l'action d'un ressort de pression (36) contre un disque à came (34) de mécanisme d'entraînement (8) et relié à un piston (40) guidé dans un cylindre (46), ainsi qu'un corps de soupape (50) disposé dans le cylindre, caractérisé en ce que le cylindre de pompage (46) préfabriqué est disposé avec le piston (40) et le corps de soupape (50) dans une chambre du récipient qui est reliée, par l'intermédiaire d'une ouverture (52, 48) avec l'intérieur du récipient de substance active (10) et avec la soupape d'injection (16), et en ce que le poussoir de piston (38) dépasse à l'extérieur par l'intermédiaire d'un passage (44) par rapport auquel l'étanchéité est assurée à l'aide d'une enveloppe en forme de soufflet plissé (54) qui est fixée sur une extrémité du bord de l'orifice de passage (44) et, par l'autre extrémité, sur le poussoir.

5. Dispositif selon la revendication 4, caractérisé en ce que les spires du ressort de pression (36) agencé sous la forme d'un ressort hélicoïdal sont reliées avec l'enveloppe en forme de soufflet plissé (54), en étant de préférence insérées dans cette dernière.

6. Dispositif selon l'une quelconque des revendications 1 à 5, caractérisé en ce qu'un tube de ventilation (18) est formé sur le récipient de substance active (10), ledit tube comportant un orifice de ventilation qui est obturé par un chapeau de fermeture (58) pouvant être tourné à un point de rupture (56).

7. Dispositif selon l'une quelconque des revendications 1 à 6, caractérisé en ce que le carter (6) du mécanisme d'entraînement (8) comporte une ouverture en forme de tasse, dirigée vers le haut et sevant à recevoir la partie inférieure du récipient de substance active et en ce que le poussoir de piston (38), et de préférence également la soupape d'injection (16) et l'orifice de ventilation, sont disposés de manière à être dirigés vers le bas sur la partie inférieure du récipient de substance active.

8. Dispositif selon l'une quelconque des revendications 1 à 7, caractérisé en ce que le récipient de substance active (10) et le mécanisme d'entraînement (8) sont reliés entre eux par l'intermédiaire d'une liaison (66, 70) séparable, établie avec crabot et fixation de position.

9. Dispositif selon la revendication 8, caractérisé en ce que la liaison comporte au moins une tige d'arrêt ou un étrier d'arrêt (66) correspondant pouvant être engagé dans des trous d'ancrage (70) du récipient de substance active (10) et du carter (6) qui sont ménagés perpendiculairement à la direction de déplacement du piston et qui sont placés mutuellement en coïncidence.

10. Dispositif selon l'une quelconque des revendications 1 à 9, caractérisé en ce que le récipient de substance active (10) est agencé sous la forme d'un corps soufflé et en ce que la substance active constitue l'agend de pression servant à la fabrication du corps soufflé.